# FASCICULE DE BREVET EUROPEEN

(11) **EP 3 927 946 B1**
(45) Date de publication et mention de la délivrance du brevet: **27.03.2024**
(21) Numéro de dépôt: 20713944.5
(22) Date de dépôt: 21.02.2020
(51) Int. Cl.: B23P 6/00, F01D 5/00, F01D 5/14, F01D 5/28

(54) **PROCÉDÉ DE RÉPARATION D'UNE AUBE D'HÉLICE DE TURBOMACHINE**
VERFAHREN ZUR REPARATUR EINER TURBOMASCHINENROTORSCHAUFEL
METHOD FOR REPAIRING A TURBOMACHINE ROTOR BLADE

(30) Priorité: 21.02.2019 FR 1901778
(43) Date de publication de la demande: 29.12.2021
(73) Titulaire: SAFRAN AIRCRAFT ENGINES, 75015 Paris (FR)
(72) Inventeur: CHARPENTIER, Sébastien, Maurice, Lucien, 77550 MOISSY-CRAMAYEL (FR); RIX, Sébastien, Jean, François, 77550 MOISSY-CRAMAYEL (FR)
(74) Mandataire: Gevers & Orès
(86) Numéro de dépôt international: PCT/FR2020/050335
(87) Numéro de publication internationale: WO 2020/169938

(56) Documents cités:
- EP-A1- 2 327 812
- EP-A1- 3 045 260
- DE-A1-102010 006 384
- FR-A1- 3 045 710
- FR-A1- 3 046 557

## Description

### Domaine technique de l'invention

La présente invention concerne un procédé de réparation d'une aube d'hélice de turbomachine, en particulier de soufflante de cette turbomachine.

### Arrière-plan technique

L'état de la technique comprend, notamment, les documents EP-A1-3045260, DE-A1-102010006384 et FR-A1-3046557.

Une turbomachine d'aéronef comporte une ou plusieurs hélice(s) qui peuvent être carénée(s) ou non carénée(s). La présente invention s'applique notamment aux aubes d'une soufflante, c'est-à-dire aux aubes d'une hélice carénée mais aussi à d'autres types d'hélices, telles que les hélices non carénées des turbopropulseurs par exemple.

Une hélice de turbomachine est traversée par un flux d'air et ses aubes peuvent subir des dommages par usure ou impact, par exemple du type FOD (acronyme de l'anglais *Flying Object Damage*) provoqué par l'impact d'un oiseau par exemple sur les aubes.

La présente invention concerne la réparation d'une aube d'hélice présentant une zone endommagée, et plus particulièrement d'une aube d'hélice comportant une pale en composite à matrice organique (CMO) et un bouclier métallique collé sur un bord d'attaque de la pale.

De façon connue, la pale en CMO peut comprendre une préforme tissée noyée dans une matrice polymérique. La préforme est obtenue par tissage de fibres de carbone en trois dimensions.

Le bouclier, tel que décrit dans la demande FR-A1-3 046 557, comporte deux ailes latérales s'étendant respectivement sur un intrados et un extrados de la pale, et un nez reliant les deux ailes. En particulier, ces deux ailes latérales et ce nez étant fortement exposés au flux de gaz qui traverse l'hélice sont particulièrement sujets à des risques d'usure par abrasion, impact ou érosion. En particulier le nez, qui est orienté vers l'amont de la turbomachine et forme le bord d'attaque du flux de gaz qui traverse l'hélice en fonctionnement, est le plus exposé aux risques d'endommagement. La présente invention propose une solution simple, efficace et économique pour réparer une aube d'hélice de ce type.

### Résumé de l'invention

La présente invention propose un procédé de réparation d'une aube d'hélice de turbomachine, en particulier de soufflante de turbomachine, cette aube comportant une pale en composite à matrice organique et un bouclier métallique collé sur un bord d'attaque de la pale, le bouclier métallique présentant une zone endommagée, le procédé comprenant une étape de rechargement de la zone endommagée, par apport d'un matériau métallique sur cette zone endommagée et fusion laser du matériau, et une étape d'ajustage de la zone métallique par usinage du matériau fondu.

L'invention propose ainsi de réparer le bouclier de l'aube *in situ,* c'est-à-dire sans décollage et retrait du bouclier vis-à-vis de la pale de l'aube. Ceci est particulièrement avantageux car cela simplifie et accélère la réparation de ce type d'aube et évite de mettre au rebus une aube lorsque le bouclier est endommagé mais reste réparable.

Selon l'invention, avant lesdites étapes de rechargement et d'ajustage, le procédé comprend une étape de recalage du bord d'attaque de la pale et une étape de refroidissement de l'intégralité de ladite pale.

L'ajout d'une étape de recalage du bord d'attaque en amont de l'étape de rechargement de la zone endommagée, permet de mesurer avec précision le profil (ou la géométrie) réel du bord d'attaque endommagé. En effet, les aubes après utilisation dans une turbomachine peuvent être déformées (aube dite avec un profil réel) et ne correspondraient donc plus aux dimensions des aubes neuves et tout juste sorties de la production (aube dite avec un profil théorique). Ainsi, le procédé selon l'invention permet de réparer spécifiquement la zone endommagée de l'aube en fonction du profil réel de son bord d'attaque (qui a pu changer par rapport à son profil théorique). De plus, cette étape de recalage permet d'identifier avec précision la ou les zones endommagées sur le bord d'attaque de l'aube. Ceci permet à l'étape de rechargement de déposer la quantité strictement nécessaire de matériau et au millimètre près de la zone endommagée à réparer.

L'ajout d'une étape de refroidissement de la pale avant l'étape de rechargement permet de maîtriser la température du bord d'attaque de la pale à proximité du joint de colle ou l'interface entre les deux matériaux (à savoir le bouclier métallique du bord d'attaque et la pale en composite à matrice organique). En effet, c'est la totalité du volume de la pale qui est refroidie, de façon à maintenir la pale à une température maximale acceptable (pouvant être de 120°C) pour le joint de colle lors de l'étape de dépose et de fusion du matériau sur la zone endommagée de l'aube. Ainsi, de manière générale, les paramètres de rechargement pour obtenir une fusion laser du matériau sont optimisés, tout en évitant une surchauffe locale et une dégradation de la pale.

Le procédé selon l'invention peut comprendre une ou plusieurs des caractéristiques et/ou étapes suivantes, prises isolément les unes des autres ou en combinaison les unes avec les autres :
- l'étape de recalage est réalisée avant ou simultanément à l'étape de refroidissement,
- l'étape de recalage est réalisée au moyen d'un palpeur mobile,
- la pale est refroidie à une température comprise entre +20 et - 20°C, de préférence entre 0 et -20°C,
- le bouclier métallique comporte deux ailes latérales s'étendant respectivement sur un intrados et un extrados de la pale, et un nez reliant les deux ailes, la zone endommagée étant située sur le nez,
- un seuil de température est prédéterminé, ce seuil de température correspondant à une température maximale admissible par la colle et/ou la pale, la fusion laser étant réalisée au moyen d'une machine dont des paramètres sont réglés pour éviter que la colle et/ou la pale atteigne ce seuil,
- le seuil est de 120°C,
- le matériau d'apport est identique au matériau du bouclier,
- le matériau d'apport est du TA6V,
- le matériau d'apport est un carbure de titane TiC,
- lors de l'étape de rechargement au moins, l'aube est maintenue sur un bâti de façon à ce que la zone soit orientée vers le haut,
- la zone est refroidie lors de l'étape de rechargement,
- le refroidissement est réalisé par conduction, par gaz neutre à température ambiante, par gaz neutre refroidit, par projection d'éléments liquides ou solides, etc.
- le refroidissement est assuré par cryogénie ou par effet Peltier,
- la fusion laser est réalisé au moyen d'une tête laser mobile,
- les étapes de recalage et de rechargement sont réalisées au moyen d'un appareil unique comportant, respectivement, le palpeur et la tête laser, et dans lequel l'appareil est apte par pivotement, d'une part, à mettre le palpeur en contact sur le bord d'attaque de la pale lors de l'étape de recalage, et d'autre part, à mettre la tête laser en regard du bord d'attaque de la pale lors de l'étape de rechargement, et
- la fusion laser est réalisée par LMD (acronyme de l'anglais *Laser Metal Deposition*) ou µlaser.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] La figure 1 est une vue schématique en perspective d'une aube d'hélice de turbomachine, et en particulier de soufflante de turbomachine,
[Fig.2] La figure 2 est une vue schématique en coupe transversale d'un bouclier d'une aube telle que celle représentée à la figure 1,
[Fig.3] La figure 3 est une vue schématique partielle en perspective d'une installation pour la mise en oeuvre du procédé selon l'invention,
[Fig. 4] La figure 4 est une vue schématique partielle en perspective de l'installation de la figure 3 et dans laquelle une étape de recalage est mise en oeuvre,
[Fig. 5] La figure 5 est une vue schématique partielle en perspective de l'installation de la figure 3 et dans laquelle une étape de rechargement est mise en oeuvre.

### Description détaillée de l'invention

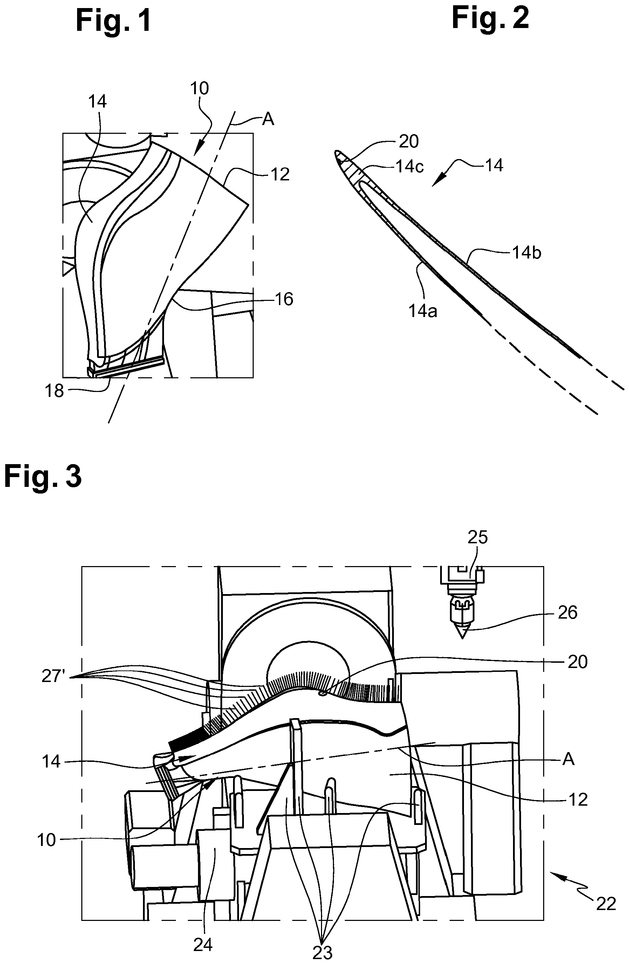

La figure 1 montre une aube 10 d'hélice et en particulier de soufflante d'une turbomachine d'aéronef. Cette aube 10 comprend une pale 12 en composite à matrice organique et un bouclier métallique 14 collé sur un bord d'attaque.

La pale 12 comporte en outre un bord de fuite 16, opposé au bord d'attaque, et un intrados et un extrados s'étendant entre les bords d'attaque et de fuite de la pale.

L'aube présente un axe d'allongement noté A. Une extrémité longitudinale de la pale 12 est libre et l'extrémité longitudinale opposée est reliée à un pied 18 pour la fixation de l'aube à un rotor de la turbomachine.

Comme cela est visible à la figure 2, le bouclier 14 comporte deux ailes latérales 14a s'étendant respectivement sur l'intrados et l'extrados de la pale 12, et un nez 14b reliant les deux ailes 14a.

Les ailes 14a, 14b définissent entre elles une cavité de réception du bord d'attaque de la pale 12, ainsi que de colle de solidarisation du bouclier à la pale.

L'ensemble du bouclier métallique 14 est susceptible d'être endommagé et de présenter dès lors une zone endommagée 20. Le bouclier 14 doit alors être soumis à un procédé de réparation. En particulier, le nez 14c est susceptible d'être endommagé comme illustré sur la figure 2. Toutefois ceci n'est qu'un exemple et la présente invention peut s'appliquer sans différenciation sur toute partie du bouclier métallique 14.

Avantageusement, la zone endommagée 20, qui comprend des impacts ou des usures, est située du sommet (ou tête) de l'aube 10 jusqu'à au moins deux tiers de la longueur totale de la pale. La longueur de l'aube 10 est mesurée par rapport à son axe A d'allongement. Plus particulièrement, la zone 20 s'étend du sommet de l'aube 10 jusqu'à la partie médiane du bouclier 14 de l'aube 10. Cette partie médiane pouvant correspondre à la portion courbée du profil aérodynamique du bord d'attaque de l'aube 10.

Le nez 14c est susceptible d'être endommagé et peut alors être soumis à un procédé de réparation.

L'invention propose un procédé de réparation d'une zone endommagée 20 d'un bouclier 14 d'une aube 10 d'hélice, ce procédé comprenant :
(a) une étape de recalage du bord d'attaque de la pale 12,
(b) une étape de refroidissement de l'intégralité de la pale 12,
(c) une étape de rechargement de la zone 20, par apport d'un matériau métallique sur cette zone 20 et fusion laser du matériau (de base et d'apport idéalement), et
(d) une étape d'ajustage de la zone 20 par usinage du matériau fondu.

L'étape de refroidissement (b) peut se réaliser après ou pendant l'étape de recalage (a).

La figure 3 montre un exemple d'installation 22 pour la mise en oeuvre du procédé selon l'invention.

Cette installation 22 comprend un bâti 24 de fixation et de positionnement de l'aube 10. L'aube 10 peut être disposée de manière fixe dans l'installation 22 par des supports 23 de maintien de l'aube 10. Sur l'exemple, plusieurs supports 23 maintiennent le pied 18, le bord de fuite 16 et le sommet de l'aube 10. L'aube 10 est positionnée de sorte que son axe A soit sensiblement horizontal. Le bâti 24 peut être conçu pour que l'aube 10 soit montée mobile autour de l'axe A et puisse être positionnée de façon à ce que le bouclier 14, et en particulier sa zone endommagée 20, soit orientée vers le haut comme dans l'exemple représenté (de préférence perpendiculairement à la tête laser 26).

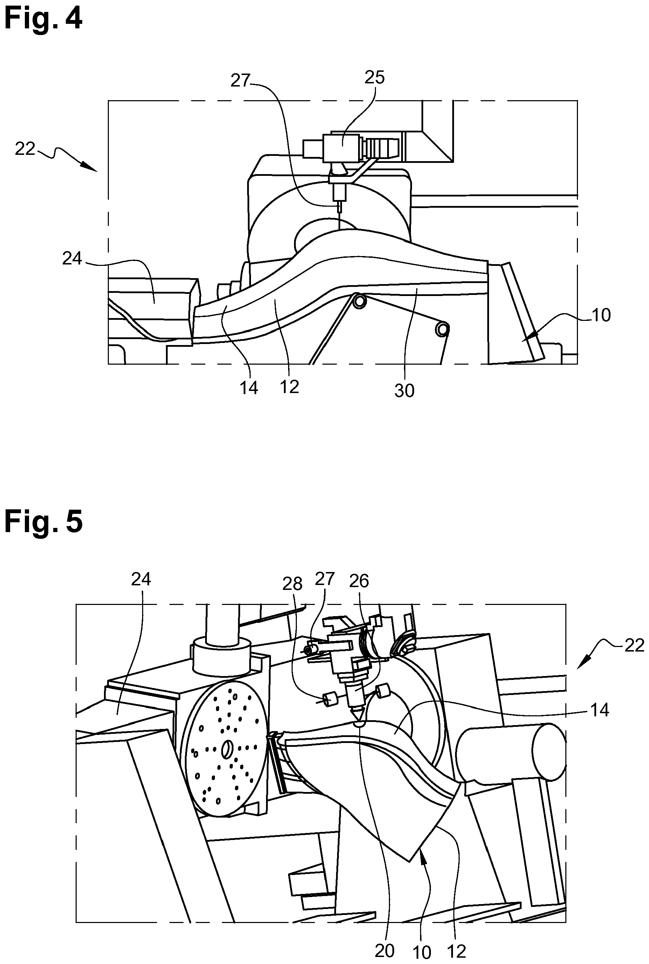

En référence à la figure 4, l'installation 22 comprend un palpeur 27 apte à examiner par toucher le bord d'attaque de l'aube 10, notamment pour localiser la zone 20. Le palpeur 27 peut entrer en contact avec le bord ou le sommet du nez 14c du bouclier 14 et/ou les surfaces intrados et extrados des ailes 14a, 14b du bouclier 14. De manière non-limitative, plusieurs points 27' à palper sont illustrés sur la figure 3.

L'installation 22 comprend un système 30 de refroidissement, de préférence par conduction. Sur l'exemple et de façon non-limitativement, l'aube 10 est au moins partiellement entourée par le système 30. Plus particulièrement, le système 30 est installé de façon à refroidir spécifiquement le bord d'attaque de l'aube.

En référence à la figure 5, l'installation 22 comprend également une tête laser 26 apte à générer un faisceau laser destiné à être focalisé sur la zone 20. La tête 26 est de préférence équipée d'un système 28 d'apport de matériau de rechargement sur la zone 20. La tête laser 26 et le palpeur 27sont mobiles. Avantageusement, la tête laser 26 et le palpeur 27 sont disposés sur un même bras 25 de l'installation 22 (visible sur la figure 4). Le bras 25 est un appareil mobile apte à pivoter, de préférence entre 90 et 180°, pour faire apparaître soit la tête laser 26 soit le palpeur 27 vis-à-vis de l'aube 10.

Le matériau d'apport est de préférence identique au matériau du bouclier 14 et est par exemple du TA6V. Avantageusement, le matériau d'apport est un carbure de titane TiC.

Le matériau est fondu par laser et plus particulièrement par une méthode LMD ou micro laser. Le LMD met en oeuvre un faisceau laser continu alors que le micro laser met en oeuvre un faisceau par impulsions. Pour le laser continu, un laser vient chauffer le matériau de base et celui d'apport en permanence. Par conséquent, la chaleur s'accumule dans une même zone et se propage dans la matière de base. Pour le laser pulsé, le laser "tire" en pointillé et est moins invasif, ce qui permet de maîtriser la zone de diffusion de la chaleur.

Pour garantir la santé de l'aube 10, il peut être important de maîtriser avec précision la température du bouclier 14, car plus le bouclier est chaud et plus la chaleur peut se propager par conduction dans la colle et le matériau de la pale, et les détériorer. Un risque de fusion de la colle et de désolidarisation du bouclier de la pale, est par exemple possible.

En pratique, un seuil de température est de préférence prédéterminé, ce seuil de température correspondant à une température maximale admissible par la colle et/ou la pale. Les paramètres de la tête laser 26 et du système de refroidissement 30 sont de préférence réglés pour éviter que la colle et/ou la pale atteigne ce seuil. Ce seuil est par exemple de 120°C.

Le système de refroidissement 30 peut être conçu pour refroidir la pale 12 ou l'aube 10 par cryogénie (par exemple par projection de CO2 liquide ou de carboglace ou d'un gaz neutre refroidit en amont du circuit de projection) ou par effet Peltier. La température de refroidissement est par exemple comprise entre +20 et -20°C, de préférence entre 0 et 20°C.

L'invention présente plusieurs avantages :
- réparer plus rapidement les aubes afin de les remettre en service le plus tôt possible ;
- réparer en s'adaptant au profil aérodynamique réel des aubes de retour de service ;
- ne pas avoir à retirer le bouclier et à le nettoyer afin de retirer les résidus de colle ;
- éviter le retrait du bouclier pour éviter les problématiques d'appairage ;
- réparer une pièce comportant un bi-matériau (matériau composite - matériau métallique) sans utiliser de moyens spécifiques du type étuve, salle blanche, machine à vide, etc.
- recharger le bouclier métallique sans altération du matériau composite (ou de la colle permettant l'assemblage bi-matériau) grâce notamment au peu d'énergie mise en oeuvre en soudage laser et au système de refroidissement ;
- limiter la déformation du bouclier induit par le rechargement ;
- rallonger la durée de vie des aubes (susceptibles d'être déformées) pour une nouvelle mise en service dans un turbomachine ;
- limiter la mise au rebut des aubes de retour de service.

## Revendications

1. Procédé de réparation d'une aube (10) d'hélice de turbomachine, en particulier de soufflante de turbomachine, cette aube comportant une pale (12) en composite à matrice organique et un bouclier métallique (14) collé sur un bord d'attaque de la pale, le bouclier métallique (14) présentant une zone endommagée (20), le procédé comprend une étape de rechargement de la zone endommagée (20), par apport d'un matériau métallique sur cette zone endommagée (20) et fusion laser du matériau, et une étape d'ajustage de la zone endommagée (20) par usinage du matériau fondu, **caractérisé en ce qu'**avant lesdites étapes de rechargement et d'ajustage, le procédé comprend une étape de recalage du bord d'attaque de la pale (12) afin de mesurer un profil réel de ladite zone endommagée (20) sur ledit bord d'attaque, et une étape de refroidissement de l'intégralité de ladite pale (12).

2. Procédé selon la revendication 1, dans lequel l'étape de recalage est réalisée avant ou simultanément à l'étape de refroidissement.

3. Procédé selon la revendication 1 ou 2, dans lequel l'étape de recalage est réalisée au moyen d'un palpeur (27) mobile.

4. Procédé selon l'une des revendications précédentes, dans lequel la pale (12) est refroidie à une température comprise entre +20 et -20°C, de préférence entre 0 et -20°C.

5. Procédé selon l'une des revendications précédentes, dans lequel le refroidissement est assuré par cryogénie ou par effet Peltier.

6. Procédé selon l'une des revendications précédentes, dans lequel le bouclier métallique (14) comporte deux ailes latérales (14a, 14b) s'étendant respectivement sur un intrados et un extrados e de la pale, et un nez (14c) reliant les deux ailes, la zone endommagée (20) étant située sur le nez (14c).

7. Procédé selon l'une quelconque des revendications 1 à 6, dans lequel un seuil de température est prédéterminé, ce seuil de température correspondant à une température maximale admissible par la colle et/ou la pale, la fusion laser étant réalisée au moyen d'une machine dont des paramètres sont réglés pour éviter que la colle et/ou la pale atteigne ce seuil.

8. Procédé selon la revendication 7, dans lequel le seuil est de 120°C.

9. Procédé selon l'une des revendications précédentes, dans lequel le matériau d'apport est identique au matériau du bouclier.

10. Procédé selon la revendication 9, dans lequel le matériau d'apport est du TA6V.

11. Procédé selon l'une des revendication 1 à 8, dans lequel le matériau d'apport est un carbure de titane (TiC).

12. Procédé selon l'une des revendications précédentes, dans lequel, lors de l'étape de rechargement au moins, l'aube (10) est maintenue sur un bâti (24)de façon à ce que la zone (20) soit orientée vers le haut.

13. Procédé selon l'une des revendications 1 à 12, dans lequel la fusion laser est réalisé au moyen d'une tête laser (26) mobile.

14. Procédé selon la revendication 13, dans lequel les étapes de recalage et de rechargement sont réalisées au moyen d'un appareil (25) unique comportant, respectivement, le palpeur (27) et la tête laser (26), et dans lequel l'appareil (25) est apte par pivotement, d'une part, à mettre le palpeur (27) en contact sur le bord d'attaque de la pale (12) lors de l'étape de recalage, et d'autre part, à mettre la tête laser (26) en regard du bord d'attaque de la pale (12) lors de l'étape de rechargement.

15. Procédé selon l'une des revendications précédentes, dans lequel la fusion laser est réalisée par LMD ou plaser.

## Patentansprüche

1. Verfahren zur Reparatur einer Schaufel (10) eines Propellers eines Turbotriebwerks, insbesondere eines Turbotriebwerkgebläses, wobei diese Schaufel ein Blatt (12) aus Verbundmaterial mit organischer Matrix und einen auf einer Vorderkante des Blatts geklebten metallischen Schutzschild (14) umfasst, wobei der metallische Schutzschild (14) einen beschädigten Bereich (20) aufweist, wobei das Verfahren einen Schritt der Neubeschichtung des beschädigten Bereichs (20), durch Zufuhr eines metallischen Materials auf diesen beschädigten Bereich (20) und Laserschmelzen des Materials, und einen Schritt der Justierung des beschädigten Bereichs (20) durch Bearbeitung des geschmolzenen Materials beinhaltet, **dadurch gekennzeichnet, dass** vor den Schritten der Neubeschichtung und Justierung, das Verfahren einen Schritt der Neuausrichtung der Vorderkante des Blatts (12), um ein reales Profil des beschädigten Bereichs (20) auf der Vorderkante zu messen, und einen Schritt der Kühlung der Gesamtheit des Blatts (12) beinhaltet.

2. Verfahren nach Anspruch 1, wobei der Schritt der Neuausrichtung vor oder gleichzeitig mit dem Schritt der Kühlung durchgeführt wird.

3. Verfahren nach Anspruch 1 oder 2, wobei der Schritt der Neuausrichtung mittels eines mobilen Tastfühlers (27) durchgeführt wird.

4. Verfahren nach einem der vorstehenden Ansprüche, wobei das Blatt (12) auf eine Temperatur zwischen +20 und -20 °C, vorzugsweise zwischen 0 und -20 °C gekühlt wird.

5. Verfahren nach einem der vorstehenden Ansprüche, wobei die Kühlung durch Kryotechnik oder durch den Peltier-Effekt gewährleistet wird.

6. Verfahren nach einem der vorstehenden Ansprüche, wobei der metallische Schutzschild (14) zwei seitliche Flügel (14a, 14b), die sich jeweils auf einer Innenseite und einer Außenseite des Blatts erstrecken, und eine Nase (14c) umfasst, die die zwei Flügel verbindet, wobei der beschädigte Bereich (20) auf der Nase (14c) vorliegt.

7. Verfahren nach einem der Ansprüche 1 bis 6, wobei ein Temperaturschwellenwert vorbestimmt wird, wobei dieser Temperaturschwellenwert einer für den Leim und/oder das Blatt maximal zulässigen Temperatur entspricht, das Laserschmelzen mittels einer Maschine durchgeführt wird, von der die Parameter geregelt werden, um zu vermeiden, dass der Leim und/oder das Blatt diesen Schwellenwert erreicht.

8. Verfahren nach Anspruch 7, wobei der Schwellenwert 120 °C beträgt.

9. Verfahren nach einem der vorstehenden Ansprüche, wobei das Zufuhrmaterial mit dem Material des Schutzschilds identisch ist.

10. Verfahren nach Anspruch 9, wobei das Zufuhrmaterial TA6V ist.

11. Verfahren nach einem der Ansprüche 1 bis 8, wobei das Zufuhrmaterial ein Titancarbid (TiC) ist.

12. Verfahren nach einem der vorstehenden Ansprüche, wobei, mindestens bei dem Schritt der Neubeschichtung, die Schaufel (10) derart auf einem Gestell (24) gehalten wird, dass der Bereich (20) nach oben orientiert ist.

13. Verfahren nach einem der Ansprüche 1 bis 12, wobei das Laserschmelzen mittels eines mobilen Laserkopfes (26) durchgeführt wird.

14. Verfahren nach Anspruch 13, wobei die Schritte der Neuausrichtung und der Neubeschichtung mittels einer einzigartigen Einrichtung (25) durchgeführt werden, die jeweils den Tastfühler (27) und den Laserkopf (26) umfasst, und wobei die Einrichtung (25) einerseits durch Schwenken in der Lage ist, den Tastfühler (27) bei dem Schritt der Neuausrichtung in Kontakt mit der Vorderkante des Blatts (12) zu bringen, und andererseits den Laserkopf (26) bei dem Schritt der Neubeschichtung gegenüber der Vorderkante des Blatts (12) zu bringen.

15. Verfahren nach einem der vorstehenden Ansprüche, wobei das Laserschmelzen durch LMD oder glaser durchgeführt wird.

## Claims

1. A method for repairing a vane (10) of a turbomachine propeller, in particular a turbomachine fan, this vane comprising a blade (12) made from an organic-matrix composite and a metal shield (14) bonded to a leading edge of the blade, the metal shield (14) having a damaged region (20), the method comprises a step of refilling the damaged region (20), by adding a metallic material to this damaged region (20) and laser melting the material, and a step of adjusting the damaged region (20) by machining the molten material, **characterised in that** prior to said refilling and adjusting steps, the method comprises a step of resetting the leading edge of the blade (12) in order to measure a real profile of said damaged region (20) on said leading edge, and a step of cooling the entire blade (12).

2. The method according to claim 1, wherein the resetting step is performed before or simultaneously with the cooling step.

3. The method according to claim 1 or 2, wherein the resetting step is performed by means of a movable probe (27).

4. The method according to any of the preceding claims, wherein the blade (12) is cooled to a temperature between +20 and -20°C, preferably between 0 and -20°C.

5. The method according to any one of the preceding claims, wherein the cooling is ensured by cryogenics or by the Peltier effect.

6. The method according to any one of the preceding claims, wherein the metal shield (14) comprises two lateral wings (14a, 14b) extending respectively on a pressure side and suction side of the blade, and a nose (14c) connecting the two wings, the damaged region (20) being located on the nose (14c).

7. The method according to any one of claims 1 to 6, wherein a temperature threshold is predetermined, this temperature threshold corresponding to a maximum temperature allowed by the glue and/or the blade, the laser melting being performed by means of a machine, the parameters of which are set to prevent the glue and/or the blade from reaching this threshold.

8. The method of claim 7, wherein the threshold is 120°C.

9. The method according to any one of the preceding claims, wherein the filler material is identical to the material of the shield.

10. The method of claim 9, wherein the filler material is TA6V.

11. The method of any one of claims 1 to 8, wherein the filler material is titanium carbide (TiC).

12. The method according to any one of the preceding claims, wherein, during the refilling step at least, the vane (10) is held on a frame (24) so that the region (20) is oriented upwards.

13. The method according to any one of claims 1 to 12, wherein the laser melting is performed by means of a movable laser head (26).

14. The method according to claim 13, wherein the resetting and refilling steps are performed by means of a single apparatus (25) comprising, respectively, the probe (27) and the laser head (26), and wherein the apparatus (25) is able by pivoting on the one hand, to bring the probe (27) into contact with the leading edge of the blade (12) during the resetting step, and on the other hand, to bring the laser head (26) to face the leading edge of the blade (12) during the refilling step.

15. The method according to any one of the preceding claims, wherein the laser melting is performed by LMD or plaser.
